# FASCICULE DE BREVET EUROPEEN

(11) **EP 3 647 882 B1**
(45) Date de publication et mention de la délivrance du brevet: **01.01.2025**
(21) Numéro de dépôt: 18203985.9
(22) Date de dépôt: 01.11.2018
(51) Int. Cl.: G04B 37/14, F16F 1/02

(54) **BARRETTE MONOBLOC DE FIXATION D'UN BRACELET À UNE MONTRE**
MONOBLOCK-LEISTE ZUR BEFESTIGUNG EINES UHRENARMBANDS AN EINER ARMBANDUHR
ONE-PIECE BAR FOR ATTACHING A STRAP TO A WATCH

(43) Date de publication de la demande: 06.05.2020
(73) Titulaire: The Swatch Group Research and Development Ltd, 2074 Marin (CH)
(72) Inventeur: VUILLE, Pierry, 2338 Les Emibois (CH); MOSTEIRO VAZQUEZ, Yoann, 1587 Montmagny (CH)
(74) Mandataire: ICB SA

(56) Documents cités:
- EP-B1- 1 351 106
- DE-C- 766 618
- FR-A1- 2 323 350
- US-A1- 2007 243 743

## Description

### DOMAINE TECHNIQUE DE L'INVENTION

L'invention concerne une barrette monobloc pour la fixation d'un bracelet à une montre.

L'invention concerne également une montre-bracelet comportant au moins une telle barrette monobloc.

### ETAT DE LA TECHNIQUE

Dans le domaine des montres-bracelets, il est connu de fixer le bracelet à la montre au moyen d'au moins une barrette à ressort. La barrette à ressort est par exemple munie à ses extrémités de deux pivots dont l'un est rétractable pour permettre de désolidariser le bracelet et la montre. La barrette à ressort est insérée dans un passant du bracelet, et chaque pivot est destiné à s'introduire dans un logement correspondant d'une corne respective de la boîte de montre, permettant la fixation du bracelet à la montre. Une telle barrette est par exemple décrite dans le document brevet CH 327838 A. La barrette comprend un corps creux ; deux pivots agencés dans le corps creux ; un ressort disposé dans le corps creux, en appui entre les pivots ; et un ergot. Les deux pivots sont aptes à coulisser dans une extrémité respective du corps creux. Le ressort repousse les pivots pour faire pénétrer leurs extrémités externes chacune dans des logements correspondants des cornes de la boîte de montre. L'ergot est actionnable via un outil spécifique, qu'un utilisateur introduit dans une extrémité du bracelet pour déplacer l'ergot contre l'action du ressort et faire sortir le pivot du logement correspondant de la corne de boîte de montre.

Toutefois, une telle barrette à ressort est relativement complexe à fabriquer du fait du nombre d'éléments différents qu'elle comporte, de tels éléments étant assemblés et montés les uns avec les autres. Ceci s'avère coûteux lorsqu'il s'agit de fabriquer plusieurs barrettes, à la fois en termes de fabrication des éléments et de montage. En outre, une telle barrette à ressort ne permet pas à un utilisateur de pouvoir rétracter facilement les deux pivots d'un seul mouvement, et sans outil.

Afin de remédier à cet inconvénient il est également connu, dans des domaines d'application divers tels que par exemple le domaine de l'horlogerie, des organes élastiques d'encliquetage réalisés d'une seule pièce de matière. Un tel organe d'encliquetage monobloc est par exemple décrit dans le document brevet EP 1 351 106 A1. L'organe d'encliquetage permet de maintenir un premier élément par rapport à un second élément, et forme par exemple une barrette monobloc de fixation d'un bracelet à une montre. La barrette monobloc présente deux extrémités reliées par une tige susceptible de se déformer dans sa direction axiale de manière élastique. L'élasticité longitudinale de la tige lui est conférée par le fait qu'elle comporte plusieurs ouvertures sur sa longueur. Les ouvertures sont situées alternativement de part et d'autre d'un plan médian de la tige.

Toutefois, un inconvénient d'une telle barrette monobloc est qu'elle est complexe et coûteuse à réaliser.

### RÉSUMÉ DE L'INVENTION

L'invention a donc pour but de fournir une barrette monobloc pour la fixation d'un bracelet à une montre, présentant une construction simplifiée et un coût de fabrication réduit, tout en permettant une solution monobloc plus esthétique et robuste.

A cet effet, l'invention concerne une barrette monobloc pour la fixation d'un bracelet à une montre, qui comprend les caractéristiques mentionnées dans la revendication indépendante 1.

Des formes particulières de la barrette sont définies dans les revendications dépendantes 2 à 4.

Un avantage de la barrette selon l'invention réside dans le fait que le corps de la barrette comporte une pluralité d'éléments reliés les uns aux autres. Chaque élément présente une portion évidée, de sorte à conférer une élasticité longitudinale à la barrette pour permettre sa déformation élastique selon sa direction longitudinale.

Selon une caractéristique technique particulière de l'invention, chaque élément comprend un cadre périphérique entourant la portion évidée, les cadres périphériques des éléments étant reliés les uns aux autres.

Avantageusement, le cadre périphérique de chaque élément présente une forme sensiblement de « M » fermé, les cadres périphériques des éléments étant reliés les uns aux autres via des organes de liaison longitudinaux, chaque organe de liaison longitudinal reliant une partie de cadre fermant le « M » d'un élément à une partie de cadre formant l'angle aigu central du « M » d'un autre élément. Ceci permet d'offrir un bon compromis entre souplesse, élasticité et résistance à la rupture pour la barrette. De plus, une telle barrette présente une durée de vie plus élevée, le travail de la matière se faisant sans ou peu de vieillissement.

Avantageusement, le corps comporte un premier ensemble d'éléments dont le cadre périphérique présente une forme sensiblement de « M » fermé, et un second ensemble d'éléments dont le cadre périphérique présente une forme sensiblement de « M » fermé, le nombre d'éléments du premier ensemble étant égal au nombre d'éléments du second ensemble, les éléments du premier ensemble étant orientés selon un même premier sens le long de la direction longitudinale selon laquelle s'étend la barrette, les éléments du second ensemble étant agencés symétriquement aux éléments du premier ensemble par rapport à un plan médian perpendiculaire à la direction longitudinale, et étant orientés selon un second sens, opposé au premier sens, le long de la direction longitudinale. Une telle configuration permet à la barrette de subir des forces de compression uniformément réparties lors de l'opération de rétractation de la barrette effectuée par un utilisateur. Ceci permet ainsi de réduire le risque de casse mécanique de la barrette.

A cet effet, l'invention concerne également une montre-bracelet comprenant au moins une barrette monobloc de fixation décrite ci-dessus, et qui comprend les caractéristiques mentionnées dans la revendication dépendante 5.

### BRÈVE DESCRIPTION DES FIGURES

Les buts, avantages et caractéristiques de la barrette monobloc de fixation d'un bracelet à une montre selon l'invention, ainsi que de la montre-bracelet la comprenant, apparaîtront mieux dans la description suivante sur la base d'au moins une forme d'exécution non limitative illustrée par les dessins sur lesquels :

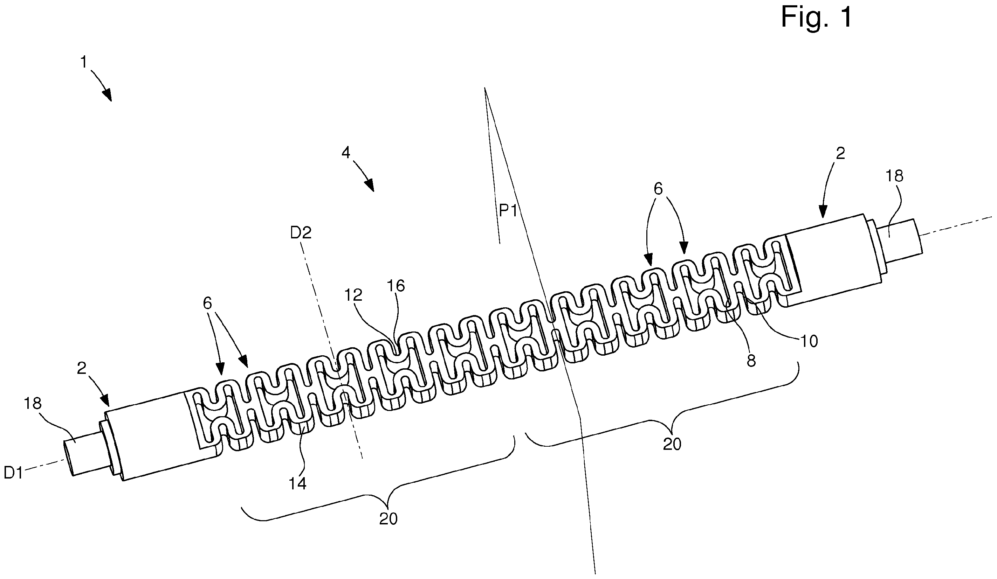

- la figure 1 est une vue en perspective d'une barrette monobloc de fixation d'un bracelet à une montre selon un exemple de réalisation de l'invention.

### DESCRIPTION DETAILLEE DE L'INVENTION

La figure 1 représente une barrette monobloc 1 de fixation d'un bracelet à une montre selon un exemple de réalisation l'invention. Le bracelet et la montre ne sont pas représentés sur les figures pour des raisons de clarté. Le bracelet est par exemple constitué de cuir, de métal, d'un matériau céramique, ou bien encore d'une autre matière, sans que cela ne soit limitatif dans le cadre de la présente invention.

La barrette monobloc 1 comprend deux pivots 2 et un corps 4 reliant les deux pivots 2. La barrette monobloc 1 est destinée à être insérée dans un passant du bracelet, chacun des pivots 2 venant s'introduire dans un logement correspondant d'une corne respective de la boîte de montre, permettant la fixation du bracelet à la montre. La barrette monobloc 1 s'étend selon une direction longitudinale D1. La barrette monobloc 1 est par exemple constituée d'un matériau plastique ou encore de caoutchouc, sans que cela ne soit limitatif dans le cadre de la présente invention.

Le corps 4 comporte plusieurs éléments 6 reliés les uns aux autres. Dans l'exemple illustratif de la figure 1, le corps 4 comporte huit éléments 6. Chacun des éléments 6 présente une portion évidée 8. La présence de telles portions évidées 8 dans les éléments 6 du corps 4 permet de conférer une élasticité longitudinale à la barrette 1, pour permettre sa déformation élastique selon la direction longitudinale D1. De préférence, comme illustré sur la figure 1, la portion évidée 8 de chaque élément 6 est une portion sensiblement centrale de l'élément 6. De préférence encore, la portion évidée 8 de chaque élément 6 est évidée selon une direction D2 perpendiculaire à la direction longitudinale D1 selon laquelle s'étend la barrette 1. De préférence également, chaque élément 6 comprend un cadre périphérique 10 entourant la portion évidée 6. Les cadres périphériques 10 des différents éléments 6 sont reliés les uns aux autres. Les cadres périphériques 10 des éléments 6 d'extrémité sont quant à eux reliés aux deux pivots 2.

Selon un mode de réalisation particulier représenté sur la figure 1, le cadre périphérique 10 de chaque élément 6 présente une forme sensiblement de « M » fermé. Les cadres périphériques 10 des éléments 6 sont reliés les uns aux autres via des organes de liaison longitudinaux 12. Chaque organe de liaison longitudinal 12 reliant deux cadres périphériques 10 relie en particulier une partie 14 de cadre fermant le « M » d'un élément 6 à une partie 16 de cadre formant l'angle aigu central du « M » d'un autre élément 6. Le corps 4 comporte également deux organes longitudinaux d'extrémité 18. Chaque organe de liaison longitudinal d'extrémité 18 relie un cadre périphérique 10 d'un élément d'extrémité 6 à un des pivots 2. Plus précisément, dans le mode de réalisation particulier représenté sur la figure 1, chaque organe de liaison longitudinal d'extrémité 18 relie une partie 16 de cadre formant l'angle aigu central du « M » d'un élément d'extrémité 6 à un des pivots 2.

Selon le mode de réalisation particulier représenté sur la figure 1, le corps 4 comporte un premier ensemble 20 d'éléments 6 dont le cadre périphérique 10 présente une forme sensiblement de « M » fermé, et un second ensemble 22 d'éléments 6 dont le cadre périphérique 10 présente une forme sensiblement de « M » fermé. Le nombre d'éléments 6 du premier ensemble 20 est égal au nombre d'éléments 6 du second ensemble 22. Dans l'exemple illustratif de la figure 1, le nombre d'éléments 6 du premier ensemble 20 et le nombre d'éléments 6 du second ensemble 22 est égal à quatre. Les éléments 6 du premier ensemble 20 sont orientés selon un même premier sens le long de la direction longitudinale D1. Les éléments 6 du second ensemble 22 sont agencés symétriquement aux éléments 6 du premier ensemble 20 par rapport à un plan médian P1 perpendiculaire à la direction longitudinale D1. Les éléments 6 du second ensemble 22 sont orientés selon un second sens, opposé au premier sens, le long de la direction longitudinale D1.

Le fonctionnement de la barrette monobloc 1 selon l'invention va maintenant être décrit.

La figure 1 représente la barrette 1 en position de repos, chacun des pivots 2 étant inséré dans un logement correspondant d'une corne respective de la boîte de montre. Lorsqu'un utilisateur de la montre exerce une pression sur les pivots 2 en direction du centre de la barrette 1, la barrette 1 se rétracte selon la direction longitudinale D1. Cette déformation de la barrette 1 est facilitée par la présence des éléments évidés 6. Ceci permet de libérer la barrette 1 de son emplacement entre les cornes de la boîte de montre, permettant de dégager la montre du bracelet. Lorsque l'utilisateur de la montre relâche la pression sur les pivots 2, la barrette 1 reprend sa forme initiale, du fait de la contrainte élastique exercée par les éléments évidés 6. La position de repos de la barrette 1 est alors retrouvée.

## Revendications

1. Barrette monobloc (1) pour la fixation d'un bracelet à une montre, la barrette (1) s'étendant selon une direction longitudinale (D1) et comprenant deux pivots (2) et un corps (4) reliant les deux pivots (2), chaque pivot (2) étant destiné à s'introduire dans un logement correspondant d'une corne respective d'une boîte de montre, le corps (4) comportant une pluralité d'éléments (6) reliés les uns aux autres, chaque élément (6) présentant une portion évidée (8), de sorte à conférer une élasticité longitudinale à la barrette (1) pour permettre sa déformation élastique selon la direction longitudinale (D1), **caractérisée en ce que** chaque élément (6) comprend un cadre périphérique (10) entourant la portion évidée (8), les cadres périphériques (10) des éléments (6) étant reliés les uns aux autres, et **en ce que** le cadre périphérique (10) de chaque élément (6) présente une forme sensiblement de « M » fermé, les cadres périphériques (10) des éléments (6) étant reliés les uns aux autres via des organes de liaison longitudinaux (12), chaque organe de liaison longitudinal (12) reliant une partie (14) de cadre fermant le « M » d'un élément (6) à une partie (16) de cadre formant l'angle aigu central du « M » d'un autre élément (6).

2. Barrette monobloc (1) selon la revendication 1, **caractérisée en ce que** la portion évidée (8) de chaque élément (6) est une portion sensiblement centrale de l'élément (6).

3. Barrette monobloc (1) selon la revendication 1 ou 2, **caractérisée en ce que** la portion évidée (8) de chaque élément (6) est évidée selon une direction perpendiculaire (D2) à la direction longitudinale (D1) selon laquelle s'étend la barrette (1).

4. Barrette monobloc (1) selon la revendication 1, **caractérisée en ce que** le corps (4) comporte un premier ensemble (20) d'éléments (6) dont le cadre périphérique (10) présente une forme sensiblement de « M » fermé, et un second ensemble (22) d'éléments (6) dont le cadre périphérique (10) présente une forme sensiblement de « M » fermé, le nombre d'éléments (6) du premier ensemble (20) étant égal au nombre d'éléments (6) du second ensemble (22), les éléments (6) du premier ensemble (20) étant orientés selon un même premier sens le long de la direction longitudinale (D1) selon laquelle s'étend la barrette (1), les éléments (6) du second ensemble (22) étant agencés symétriquement aux éléments (6) du premier ensemble (20) par rapport à un plan médian (P1) perpendiculaire à la direction longitudinale (D1), et étant orientés selon un second sens, opposé au premier sens, le long de la direction longitudinale (D1).

5. Montre-bracelet comportant au moins une barrette monobloc (1) de fixation du bracelet à la montre, **caractérisée en ce que** la barrette monobloc (1) est conforme à l'une quelconque des revendications précédentes.

## Patentansprüche

1. Einteiliger Steg (1) zur Befestigung eines Armbands an einer Uhr, wobei sich der Steg (1) in einer Längsrichtung (D1) erstreckt und zwei Zapfen (2) und einen die beiden Zapfen (2) verbindenden Körper (4) umfasst, wobei jeder Zapfen (2) dazu bestimmt ist, in einen entsprechenden Sitz eines jeweiligen Horns eines Uhrgehäuses eingeführt zu werden, wobei der Körper (4) eine Vielzahl von miteinander verbundenen Elementen (6) beinhaltet, wobei jedes Element (6) einen ausgehöhlten Abschnitt (8) aufweist, um dem Steg (1) eine Längselastizität zu verleihen, um seine elastische Verformung in der Längsrichtung (D1) zu ermöglichen, **dadurch gekennzeichnet, dass** jedes Element (6) einen Umfangsrahmen (10) umfasst, der den ausgehöhlten Abschnitt (8) umgibt, wobei die Umfangsrahmen (10) der Elemente (6) miteinander verbunden sind, und dadurch, dass der Umfangsrahmen (10) jedes Elements (6) eine im Wesentlichen geschlossene "M"-Form aufweist, wobei die Umfangsrahmen (10) der Elemente (6) über Längsverbindungsorgane (12) miteinander verbunden sind, wobei jedes Längsverbindungsorgan (12) einen Rahmenteil (14), der das "M" eines Elements (6) schließt, mit einem Rahmenteil (16) verbindet, der den mittleren spitzen Winkel des "M" eines anderen Elements (6) bildet.

2. Einteiliger Steg (1) nach Anspruch 1, **dadurch gekennzeichnet, dass** der ausgehöhlte Abschnitt (8) jedes Elements (6) ein im Wesentlichen mittlerer Abschnitt des Elements (6) ist.

3. Einteiliger Steg (1) nach Anspruch 1 oder 2, **dadurch gekennzeichnet, dass** der ausgehöhlte Abschnitt (8) jedes Elements (6) in einer Richtung (D2) ausgespart ist, die senkrecht zur Längsrichtung (D1) verläuft, in der sich der Steg (1) erstreckt.

4. Einteiliger Steg (1) nach Anspruch 1, **dadurch gekennzeichnet, dass** der Körper (4) eine erste Einheit (20) von Elementen (6) beinhaltet, deren Umfangsrahmen (10) eine Form eines im Wesentlichen geschlossenen "M" aufweist, und eine zweite Einheit (22) von Elementen (6), deren Umfangsrahmen (10) eine Form eines im Wesentlichen geschlossenen "M" aufweist, wobei die Anzahl an Elementen (6) der ersten Einheit (20) gleich der Anzahl an Elementen (6) der zweiten Einheit (22) ist, wobei die Elemente (6) der ersten Einheit (20) in einer gleichen ersten Richtung entlang der Längsrichtung (D1), in der sich der Steg (1) erstreckt, ausgerichtet sind, wobei die Elemente (6) der zweiten Einheit (22) symmetrisch zu den Elementen (6) der ersten Einheit (20) bezüglich einer Mittelebene (P1) senkrecht zur Längsrichtung (D1) angeordnet sind, und in einer zweiten Richtung, entgegengesetzt zur ersten Richtung, entlang der Längsrichtung (D1) ausgerichtet sind.

5. Armbanduhr, die mindestens einen einteiligen Steg (1) zur Befestigung des Armbands an der Uhr beinhaltet, **dadurch gekennzeichnet, dass** der einteilige Steg (1) nach einem der vorstehenden Ansprüche ist.

## Claims

1. One-piece bar (1) for attaching a bracelet to a watch , the bar (1) extending in a longitudinal direction (D1) and comprising two pivots (2) and a body (4) connecting the two pivots (2), each pivot (2) being intended to be introduced into a corresponding housing of a respective horn of a watch case, the body (4) comprising a plurality of elements (6) connected to one another, each element (6) having a hollowed portion (8), in order to give the bar (1) longitudinal elasticity to allow elastic deformation thereof in the longitudinal direction (D1) **characterized in that** each element (6) comprises a peripheral frame (10) surrounding the hollowed portion (8), the peripheral frames (10) of the elements (6) being connected to one another and **in that** the peripheral frame (10) of each element (6) has substantially the shape of a closed 'M', the peripheral frames (10) of the elements (6) being connected to one another via longitudinal connecting members (12), each longitudinal connecting member (12) connecting a portion of frame (14) that closes the 'M' of one element (6) to a portion of frame (16) that forms the central acute angle of the 'M' of another element (6).

2. One-piece bar (1) according to claim 1, **characterized in that** the hollowed portion (8) of each element (6) is a central portion of the element (6).

3. One-piece bar (1) according to claim 1 or 2, **characterized in that** the hollowed portion (8) of each element (6) is hollowed in a perpendicular direction (D2) to the longitudinal direction (D1) in which the bar (1) extends.

4. One-piece bar (1) according to claim 1, **characterized in that** the body (4) has a first set (20) of elements (6) whose peripheral frame (10) has substantially the shape of a closed 'M', and a second set (22) of elements (6) whose peripheral frame (10) has substantially the shape of a closed 'M', the number of elements (6) of the first set (20) being equal to the number of elements (6) of the second set (22), the elements (6) of the first set (20) being oriented in a same first direction along the longitudinal direction (D1) in which the bar (1) extends, the elements (6) of the second set (22) being arranged symmetrically to the elements (6) of the first set (20) with respect to a median plane (P1) perpendicular to the longitudinal direction (D1), and being oriented in a second direction, opposite to the first direction, along the longitudinal direction (D1).

5. Wristwatch comprising at least one one-piece bar (1) for attaching the bracelet to the watch, **characterized in that** the one-piece bar (1) conforms to any of the preceding claims.
